# EUROPEAN PATENT SPECIFICATION

(11) **EP 0 579 737 B1**
(45) Date of publication and mention of the grant of the patent: **17.09.1997**
(21) Application number: 92910117.8
(22) Date of filing: 25.03.1992
(51) Int. Cl.: B29C 51/10, B29C 51/18, B29C 51/30, B29C 51/42, B29D 22/00

(54) **MANUFACTURE OF SHAPED PRODUCTS OF BIAXIALLY ORIENTED POLYMERIC MATERIAL**
HERSTELLUNG GEFORMTER TEILE AUS BIAXIAL GERICHTETEM POLYMERMATIRIAL
PRODUCTION DE PROFILES EN POLYMERE A ORIENTATION BIAXIALE

(30) Priority: 25.03.1991 US 674761
(43) Date of publication of application: 26.01.1994
(73) Proprietor: FORTEX, INC., Denver, CO 80209 (US)
(72) Inventor: FORTIN, John, K., Niwot, CO 80544 (US)
(74) Representative: Lucas, Brian Ronald
(86) International application number: PCT/US92/02347
(87) International publication number: WO 92/16354

(56) References cited:
- EP-A- 0 155 763
- WO-A-90/10410
- GB-A- 1 136 613
- JP-A-56 164 817
- JP-A-59 078 824
- US-A- 3 662 049
- US-A- 4 233 022
- US-A- 4 388 356
- US-A- 4 469 270
- US-A- 4 878 826

## Description

The present invention relates to a process for making biaxially oriented thermoplastic container-shaped articles.

Patent Publication No. WO 90/10410 contains a discussion of the prior art relating to the molecular orientation and heat shrinking processes of thermoplastic saturated linear polymers such as polypropylene, polyethylene or polyethylene terephthalate (PET), and the formation of containers from such materials is also reviewed.

A commonly employed process for the production of thermoplastic containers, particularly for use on the food industry, is referred to as thermoforming. Thermoforming is the formation of an article by manipulation of thermoplastic material at a temperature above its flow temperature but below its melt temperature.

In many of these systems, the process begins with a blank of thermoplastic material. The temperature of the blank is elevated to near its melt temperature and then it is forged into a disc-shaped preform. The peripheral edge of the preform is then the incipient rim of the final container, which is rapidly cooled after forging while the bulk of the preform remains at an elevated temperature. The preform is then subjected to thermoforming and the thermoplastic attains the desired final shape. Preforms can also consist of sheets of thermoplastic, or may be produced by injection molding techniques.

The thermoforming step can be accomplished in a number of ways. In one variant, thermoforming is accomplished by introducing a male plug that presses the malleable thermoplastic into a female mold. Patents US-A-3499188, 3546746, 3642415, and 3757718 of Johnson and 3532786 and 3606958 of Coffman, all assigned to Shell Oil Company, describe the plug molding variant of thermoforming.

In other variants of thermoforming, the deformation of the malleable thermoplastic is accomplished by either increasing the fluid pressure at the side of the preform opposite a female mold or decreasing the fluid pressure in the area between the preform and the interior of the female mold, or both. It is taught that this can only be utilised when the depth of draw is minimal (e.g. when the ratio of depth of the container to diameter of the container at the bottom is less than 1.0, see e.g. US-A-3739052, 3947204, 3995763 and 4005967 of Ayres et al, all assigned to Dow Chemical Company and 3244780 of Levey.

In a further variant of the thermoforming step, it is often desirable to combine plug molding and blow molding. Plug assisted blow molding is most often useful when a larger depth of draw is required or when the product has some unusual shape requirements. Plug assisted blow molding is described in US-A-3849028 of Van der Greg et al and JP-A-56-164817.

WO 90/10410 discloses a process for forming an unoriented sheet of thermoplastic material into a biaxially oriented container-shaped article. The sheet of material is clamped over the mouth of a forming tube, and heated to about the orientation temperature of the thermoplastic material. An intermediate container-shaped article is formed by deforming a portion of the sheet so that it enters into the forming tube and becomes biaxially oriented. The intermediate is then placed on a male form of a predetermined size, shape and texture, and heated and formed above the orientation temperature of said material to heat shrink the intermediate onto the surface of the male form and create a final shape. The heat-shrunk product is cooled and removed the from the male form. In this process,
(a) the sheet is formed into a biaxially oriented container-shaped intermediate article by applying fluid pressure to a face of the sheet in the absence of a forming plug to cause the sheet to conform to the interior shape of the forming tube; and
(b) means is provided for preventing the material entering into and conforming to the shape of the forming tube from sticking to the walls of the forming tube, so as to permit the biaxial orientation to occur.

The problem with which the invention is concerned is to speed up a heat shrinking step as disclosed in WO 90/10410 without introducing optical imperfections into the container. That problem is solved, according to the invention, by a process as defined in claim 1 of the accompanying claims.

Various embodiments of the invention will now be described, by way of example only, with reference to the accompanying drawings, in which:
Figure 1 is a cross-sectional view of a first embodiment of an intermediate container forming apparatus;
Figure 2 is a cross-sectional view of a second embodiment of an intermediate container forming apparatus for use in the production of short drawn products;
Figure 3 is a side sectional view of a short drawn container which may be made by the process of the invention;
Figure 4 is a cross-sectional view of a first embodiment of a rim forming apparatus according to the invention;
Figure 5 is a cross-sectional view of a second embodiment of a rim forming apparatus for use in the formation of short drawn containers;
Figure 6 is a cross-sectional view of an embodiment of a first form of heated male mold for use in the process of the invention;
Figures 7a-7d are cross-sectional views of an embodiment of a heat shrinking apparatus for carrying out the process of the invention, in which various stages of the process occur in progression;
Figure 8 is a timing chart showing the sequence of operations to be performed in order to carry out the heat shrinking process of the invention by means of the apparatus of Figures 7a-7d;
Figure 9 is a cross-sectional view of a further apparatus in which the rim heat setting and heat shrinking processes are combined; and
Figure 10 is a further cross-sectional view of the apparatus of Figure 9.

### Outline of the container forming procedure

The production of the present biaxially oriented thermoplastic container-shaped articles generally proceeds by three discrete stages or steps. These are:
- production of a biaxially oriented intermediate container;
- rim heat-setting of the intermediate container; and
- a heat shrinking/body setting stage in which the biaxially oriented intermediate with a heat set rim is shrunk then heat set on a male form.

These three stages are generally part of the process for forming container-shaped articles such as for food containers or for laboratory beakers. Where containers are to be produced without rims or without heat set rims, the process can be performed in two stages with the rim heat setting step being eliminated. The description which follows discloses embodiments of apparatus which can be used for each of the above three stages. The various stages or steps may occur in discrete locations. Where heat is required in any given step, the relevant station can be provided with heating means, and ovens will generally not be employed.

It is generally necessary in the present process that the blow moulding and heat shrinking steps be performed at separate stations. In the blow moulding step, it is critical that the temperatures be maintained within a narrow range. Since these temperatures are lower than the heat-shrinking temperatures employed, the present invention can be performed more consistently if two separate stations are employed. Although a single station apparatus, in which very accurate temperature cycling control means would be necessary, would be feasible, it is believed that the gain in efficiency from the elimination of a station would not compensate for the loss of efficiency in time lost and temperature control problems.

In an embodiment of the invention for the production of containers (including at least beakers and food containers) the three processes of intermediate forming, rim heat setting and heat shrinking may be accomplished by a single machine or apparatus having three discrete stations for intermediate forming, rim heat setting and heat shrinking/body setting. (Of course the rim heat setting station may be eliminated where non heat-set rims are desired). In this manner a sheet of thermoplastic material will enter the machine and a completed container will exit the machine. A first section of thermoplastic sheet may enter the intermediate forming station where a plurality of biaxially oriented intermediates are formed simultaneously while still existing as part of the thermoplastic sheet. At this point the first section of thermoplastic sheet is advanced to the rim setting station of the machine. While the biaxially oriented intermediates are rim-set, a new set of intermediates is being formed in the first station. The sheet is then further advanced to the heat shrinking/body setting station, the second section of thermoplastic sheet is at the rim heat set station and a third section of the thermoplastic sheet is at the intermediate forming station. The advancement continues with the sheet entering the machine and containers coming out of the end. Cutting machines for separating the containers from the remainder of the sheet can be at a fourth station, or can be done at a different location or time. The process can be extended further at the beginning as well. The machine may include means for taking the thermoplastic resin and extruding the sheet to be used in the process.

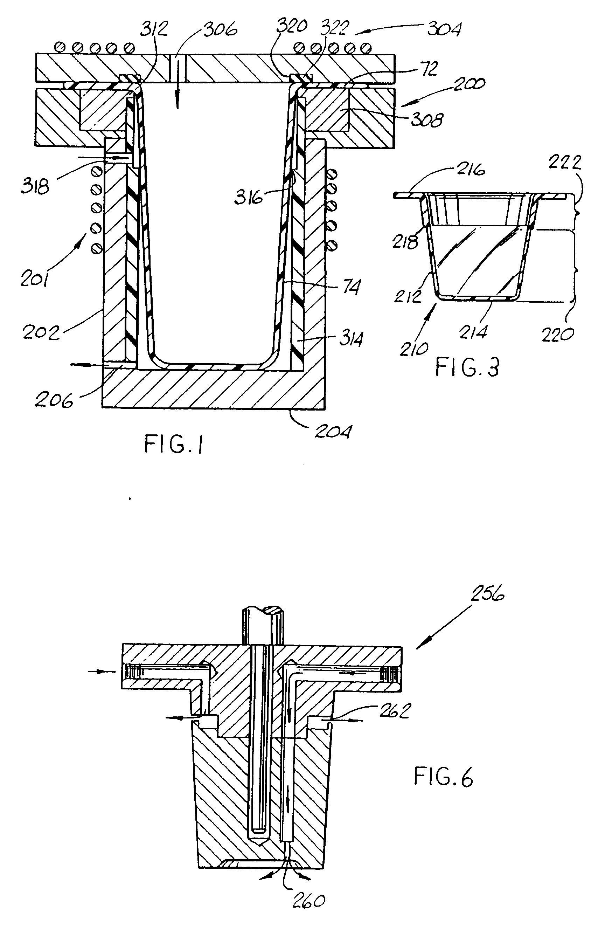

When operating under the following regime, the longest time for performing any of the steps dictates the overall rate of production of containers. It is very desirable, therefore that the time for each station and process be minimised. Using the apparatus and process described below with reference to Figures 1-7, nucleated PET long drawn and short drawn containers can be produced with a rate limiting step of not more than about 15 seconds, and in the production of long drawn or short drawn nucleated PET food containers, it is desirable that the rate limiting step should last at most about 10 seconds.

In certain embodiments of the present process, it is important that the rim heat-setting process should be accomplished before the heat shrinking step of the container forming process. This is indicated when the rim pulls into the sidewalls upon heat shrinking.

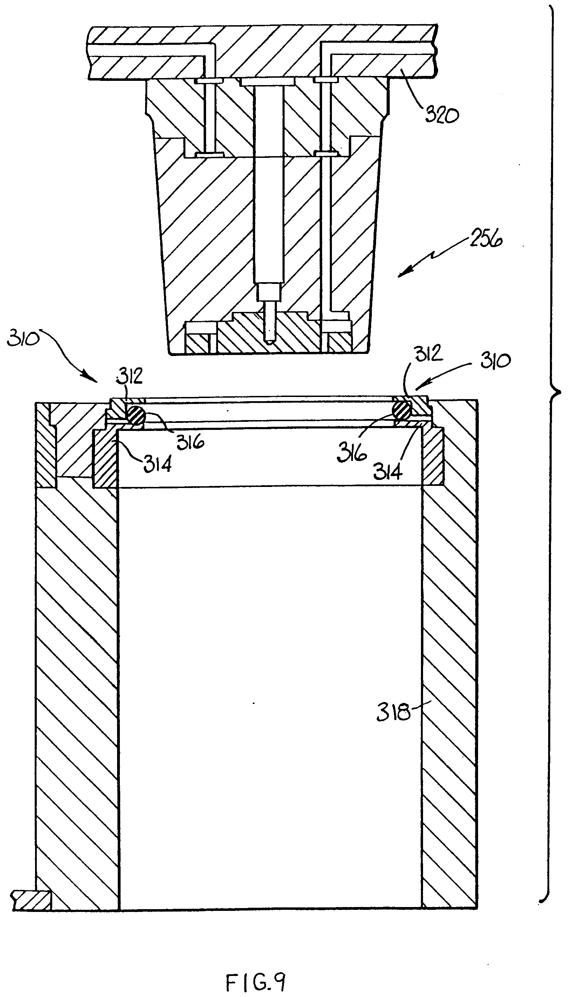

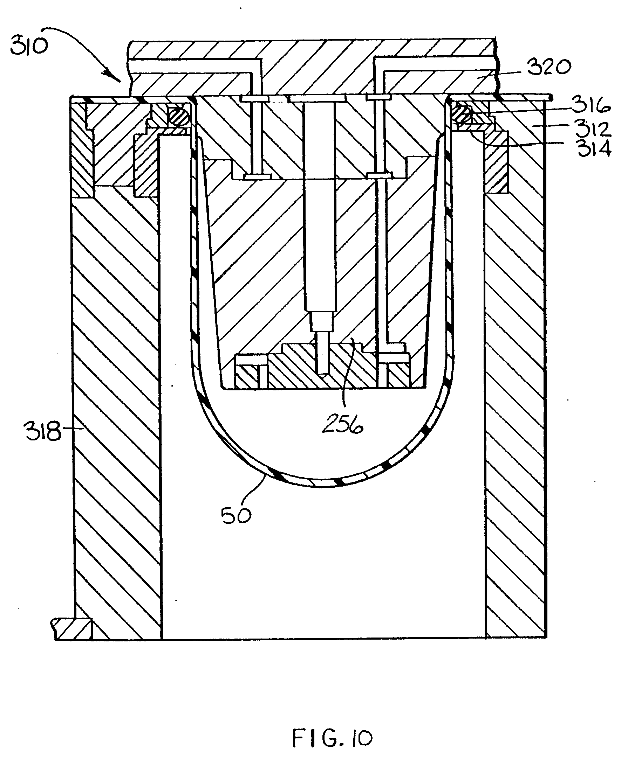

In an alternative embodiment, illustrated in Figs 9 and 10, the rim heat setting process and the heat shrinking step are performed simultaneously at the same station, In this embodiment of the invention, the problem of the unoriented rim being pulled into the sidewalls of the container is addressed by providing means for clamping the sidewalls adjacent the mouth of the intermediate at the same time that the rim is being heat set and sidewalls of the intermediate are being heat-shrunk.

### Suitable thermoplastic materials

As disclosed in WO 92/16354, the materials contemplated for use with this invention generally fall within the general category of linear thermoplastic polymer compounds which may be crystalline polymers or crystallisable polymers. The disclosure of WO 92/16354 concerning the materials which can be used is incorporated herein by reference.

In particular, polyesters are contemplated for use with this invention and are crystallisable polymers consisting essentially of a linear saturated condensation product of at least one glycol selected from the group consisting of neopentyl glycol, cyclohexane dimethanol and aliphatic glycols of the formula HO(CH₂)ₙOH where n is an integer of at least two and at least one C₈-C₁₄ dicarboxylic acid or reactive derivatives thereof. Examples of polyesters include homo- and copolymers of polyethylene terephthalate (PET), poly 1,4-cyclohexane dimethanol terephthalate, polyethylene-2,6-naphthalenedicarboxylic acid, polyethylene isophthalate, and polypropylene terephthalate. Representative comonomers that can be used up to a total of about 16 mole % to reduce the crystallinity and melting point are diethylene glycol, aliphatic dicarboxylic acids (including azelaic, sebacic, dodecanedioic acid). Furthermore the following comonomers can be used where not present in the base polyester: 1,4-cyclohexane dicarboxylic acid, 1,3-trimethylene glycol, 1,4-tetramethylene glycol, 1,6 hexanemethylene glycol, 1,8-octamethylene glycol, 1,10-decamethylene glycol, ethylene glycol, isophthalic acid, terephthalic acid, 2,6-naphthalene dicarboxylic acid, butylene glycol, cyclohexanedimethanols, and propylene glycol. The polyesters will generally have an intrinsic viscosity of at least 0.3, preferably at least 0.5 and most preferably at least 0.65.

In addition, monomers that may result in branch points can be used for improved melt strength and processability. They would include trimethylolpropane, pentaerythritol, trimellitic acid and trimesic acid. These monomers, if used, should be added at less than 1 mole %.

A crystallisation promoter can be present in the polyester to reduce the time for crystallising the polyester and thus to speed up the rim setting step described hereinafter. Thus in certain preferred embodiments of the invention, pure polyethylene terephthalate ("PET") is used. In other preferred embodiments a PET containing a nucleating agent (crystallisation promoter) is used. Non-oriented PET containing nucleating agents will crystallise much more rapidly than pure PET, and such materials may be preferred where the crystallisation of non-oriented material is a process rate-limiting step. Examples of crysallization promoters include those which are derived from (1) C₇-C₅₄ hydrocarbon acid or organic polymers having at least one carboxyl group attached thereto or (2) sodium or potassium ion sources capable of reacting with the carboxyl groups of the acids or polymers of (1). The crystallisation promoter preferably contains the sodium and/or potassium ion source in sufficient quantity that the sodium and/or potassium concentration in the polyester is greater than 0.01 wt %. Preferably the crystallisation promoter is derived from (1) polyalkylene terephthalate copolymers or polycycloalkylene copolymers and (2) sodium and/or potassium ion sources capable of reacting with the carboxyl group (1). Preferably the crystallisation promoter is selected so as not to have an adverse effect on clarity of the containers made from the polyester resin. PET having 50-250 ppm sodium or potassium end groups is preferable. Greater amounts can be used when the thickness of the PET sheet and the heat transfer conditions in the heating of the PET sheet are such that crystallisation prior to blow forming does not occur. Lesser amounts can also be used, e.g. as little as 20 ppm when a lower rate of crystallisation promotion is desirable.

The preferred nucleated PET for the manufacture of containers having non-oriented crystallised rims is PET having about 110 ppm sodium end groups and an intrinsic viscosity of about 0.85 measured as described in US Patent No 4753980 of Deyrup (col. 3 lines 4-13), specifically incorporated herein by reference. This nucleated PER was used in Example 1 presented hereinafter.

Throughout this specification, the sheet of thermoplastic material that is in the production of biaxially oriented intermediates is referred to a being unoriented. It should be noted, however, that the definition of unoriented does not exclude the presence of orientation which seems to inevitably be present as a result of the process for making the sheet, such as by extrusion casting of molten polymer. To the extent that the thermoplastic sheet is oriented, it must be uniformly biaxially oriented, such that upon drawing in the intermediate forming step a distinct transition will be formed between the oriented body and the non-oriented rim. In the case of PET, this distinct transition will manifest itself as a translucent rim and transparent body in the finished container.

### Containers that can be made by the present process

Preferred containers that can be made by the process of this invention have a flat or contoured bottom and cylindrically shaped side walls. The bottom of the container is strong because it has the highest orientation in the container as indicated by this being the thinnest region of the container. However, the apparatus described herein can be adapted to form containers having a variety of shapes, e.g. having sidewalls that are oval, squared, bow-tie shaped or irregular in cross-section. The articles produced according to these processs are open at the mouth and no neck with a reduced diameter is formed at the mouth. It is possible to form containers that have concave rather than flat bottoms by applying a vacuum to form the bottom of the container into a concave area of the male form.

### Formation of the intermediate

As previously stated, the present process involves two fundamental steps which are intermediate formation and heat shrinking/body setting. The combination of these steps, performed at separate stations, permits the formation of container shaped articles that cannot be produced by heretofore known means.

Traditional blow forming procedures to create an intermediate structure are unacceptable. In PET, these techniques could not produce intermediates having a sufficient depth to diameter to produce the required orientation in the side walls and prevent whitening when heat setting, particularly near the rim. The reason is that in traditional blow forming, the incipient intermediate sticks to the side wall of the forming tube and orientation is not uniform. Sticking on the side wall will cause the intermediate in a region near its mouth to be too thick and unoriented and in a region near its bottom to be too thin. Processes which use a plug to deform the thermoplastic sheet give rise to an intermediate in which there are scratches resulting from the higher forces required to form the material at its orientation temperature. These scratches will be seen in the final product and will detract from the appearance of an otherwise transparent container.

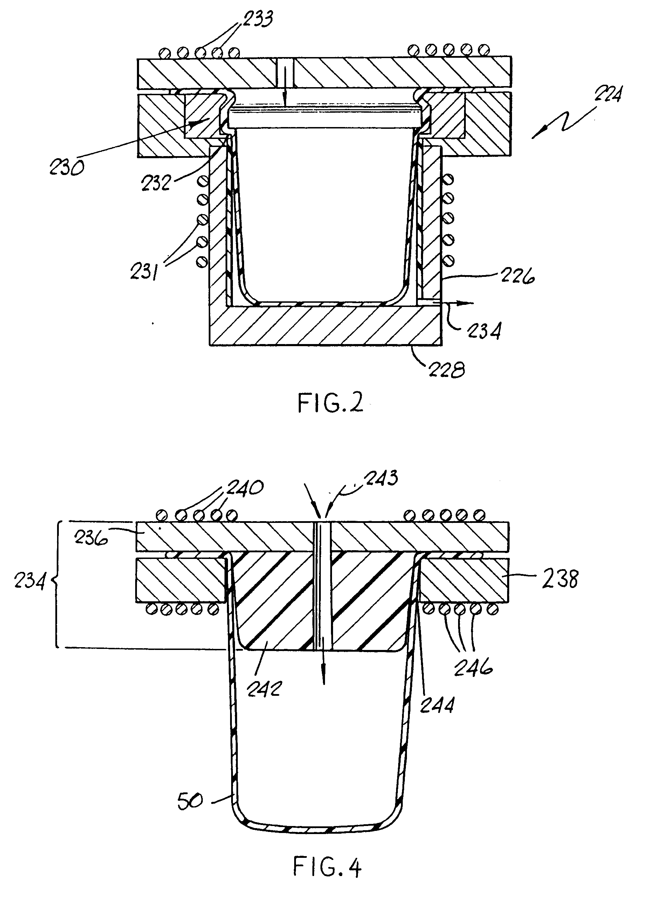

A process and apparatus for the production of a biaxially oriented intermediate container are disclosed with reference to Figs 1 and 2 of WO 90/10410, and this disclosure is incorporated herein by reference. This intermediate container can be heat shrunk as described herein. In a preferred embodiment of the forming tube of Fig 2 of that specification, the area above the Teflon sleeve may also be coated with Teflon or contain a thin Teflon sleeve. Figure 4 of WO 90/10410 shows a rim forming apparatus that will heat set flat portions of unoriented thermoplastic sheet surrounding the intermediate container. This disclosure is also incorporated herein by reference. Apparatus shown in Figure 1 herein solves the sticking problem by the creation of an air cushion that, along with a non-stick coating on the walls, allows the formation of the intermediate.

The intermediate container retains a shape generally corresponding to the interior dimensions of the forming tube. If the intermediate is formed at temperatures such that significant orientation occurs, no matter what air pressures are employed, upon release of the air pressure and removal of the intermediate from the forming tube, any squared edges will become rounded, and the formed shape would not be useful for applications of the invention calling for flat bottomed containers. However, the present blow moulding apparatus allows for the blow moulding of products with relatively large depth of draw (depth to diameter of greater than 1.0; diameter referring to the diameter in the plane of the original sheet) and fully oriented side walls. For example, in a preferred blow moulding apparatus used with PET, the depth of draw in the blow moulding step is greater than about 1.3 (depth/diameter).

A characteristic of blow forming thermoplastics at their orientation temperature is that the formation of the intermediate does not occur evenly throughout the entire portion of the material to be ultimately formed. Instead of all areas of the thermoplastic stretching or drawing evenly, orientation invariably begins in the middle of the sheet and proceeds outwardly with a distinct and definite line of transition between oriented and unoriented areas. When an intermediate with fully oriented side walls is desired, drawing must continue to a depth sufficient to bring the transition line all the way to the mouth of the forming tube. The minimum draw ratio (depth to diameter) to achieve this state is a function of the type of material used, and is essentially independent of the forming process (blow forming or plug forming). For PET the minimum draw ratio that will yield fully oriented side walls is greater than about 1.3 (depth/diameter).

In order to improve the speed of the heat shrinking/ body setting process, there is disclosed an apparatus and process which can be used for either long drawn or short drawn containers.

Figure 1 shows apparatus used in the production of the biaxially oriented intermediate container. It includes a forming tube 200 consisting of a cylindrical side wall 202, a bottom 204 and venting port 206. A top clamping portion 300 is designed to fit tightly against the forming tube 200 and to create an airtight seal at the mouth 302 of the forming tube 200. The top clamping portion 300 is equipped with heating elements 304 capable of maintaining the top clamping portion 300 at a given temperature that may differ from that of the forming tube 200. The top clamping portion 300 is also equipped with an air inlet port 306.

The forming tube 200 is also equipped with separate heating elements 201. Utilising this embodiment of the apparatus, the thermoplastic sheet may be transformed without the use of an oven. At the top of the forming tube 200 adjacent the mouth of the tube, there is a circular metal insert 308 such that said insert may be removed to facilitate the insertion or removal of the non-stick liner 314. The metal insert 308 has a small lip 312 extending into the forming tube 200. The lip is approximately 0.05-0.15 cm (0.02-0.06 inches) high and extends into the forming tube to form a continuous inner diameter with the non-stick liner. The metal insert is preferably made of aluminium. The side walls of liner 314 have a step-up ridge 316 defined by a horizontal ledge dividing two regions of the forming tube having different diameters. The non-stick surface extends up to the lower side of lip 312. The forming tube 200 is also equipped with an air inlet 318 in the upper (larger diameter) section of the forming tube.

The step-up ridge 316 is found in the top half of the forming tube 200. This embodiment acts in much the same way as is shown in Figs 1 and 2 of WO 90/10410, the provision of air inlet port 318 and step-up ridge 316 allowing the formation of a relatively deep drawn biaxially oriented intermediate.

In this embodiment of the intermediate forming apparatus, the upper clamping portion 300 is shown having a circular channel 320 that corresponds to the sealing edge 310 of the forming tube 200. The circular channel 320 holds a rubber gasket 322 that may be used to perfect the seal between the forming tube 200 and the top clamping portion 300. The gasket 322 clamps the sheet to be formed firmly at the mouth of the forming tube, and thereby enhances the definition or sharpness of the break between the side wall 74 and the rim 72 of the container product ultimately formed. This additional sealing embodiment may be employed with any embodiment of the intermediate forming apparatus.

In this embodiment of the intermediate forming apparatus, the top clamping portion 300 and the female forming tube 200 are heated separately and may be maintained at different temperatures. The top clamping portion 300 is preferably maintained at an intended sheet forming temperature e.g 88-99°C (190-210°F), whereas the forming tube 200 is preferably maintained at a temperature lower than said forming temperature e.g. 82-88°C (180-190°F) so that the rim portion of the intermediate will stiffen and facilitate the removal of the intermediate from the apparatus.

Figure 2 shows an additional embodiment of an apparatus for the production of short drawn biaxially oriented intermediate containers. The embodiment of Figure 2 is specially designed for the production of containers 210 of the type generally shown in Fig 3. "Short drawn" is defined herein to mean containers having a depth to diameter ratio of 0.5-1.2 and preferably a depth to draw of 1.0 or less. Such short drawn containers are particularly desirable for use in the food container industry. The short drawn container 210 consists of side walls 212, a bottom 214 and a rim 216. At a certain horizontal line of delineation 218 the side walls are divided into a lower transparent biaxially-oriented and heat set portion 220 and an upper, translucent, crystallised and heat set portion 222. The line of delineation 218 is found generally in the top 10-40% of the full height of side walls 212. The bottom 214 of the short drawn container 210, like the lower portion of the side walls 220 is transparent, biaxially oriented and heat set. The rim portion 216 of the container, like the upper portion of the side walls 222, is translucent, crystallised and heat set. The formation of such a container requires the use of especially designed embodiments of the intermediate forming and rim setting apparatus as described below.

Fig 2 shows a female forming tube 224 which consists of cylindrical side walls 226, a bottom 228 and a venting port 234. The side walls 226, near the mouth of the forming tube 224, are distinguished by an undercut area 230 which consists of a horizontal band with an increased diameter relative to the bulk of the forming tube. The undercut area 230 is preferably of bare aluminium, below which the rest of the side walls are coated with a non-stick material or include a liner of a non-stick material such as Teflon.

Fig 2 shows the forming tube including a fully formed short drawn biaxially oriented intermediate. The horizontal edge 232 at the bottom base of the undercut area 230 serves a critical function in the formation of an intermediate that can be transformed into a short drawn container 210. This embodiment is designed so that the incipient intermediate being "blown" into the forming tube 224 "catches" on the horizontal edge 232 which prevents slippage of thermoplastic material past the edge. Because of this, the thermoplastic between the mouth of the forming tube and the horizontal edge 232 will slide along the non-stick side walls of the forming tube to form the intermediate's oriented side walls and bottom. Because much of the thermoplastic material in the body of the intermediate is not thinned and oriented, the intermediate may be blown to much shallower depths than the intermediate made in the embodiments of WO 90/10410.

As in the embodiment shown in Figure 1, the forming tube and the upper clamping element both include heating elements 231, 233 respectively. Preferably the forming tube portion 244 is heated separately from the clamping portion of the intermediate forming apparatus, and is held at 82-85°C (180-185°F) while the clamping portion is held at 93-98°C (93-98°F). This combination of temperatures makes the line formed at the horizontal edge 232 more distinct, which means that the line of delineation 218 on the final product will be straight and distinct.

The embodiment for producing intermediates for short drawn containers shown in Fig 2 produces a product 210 that cannot be produced using other known techniques. In particular, the product produced using plunger forming or plug-assisted blow moulding techniques would be distinctly different in that the orientation of the side wall into the two distinct regions of this embodiment of the invention cannot be obtained. Using plunger techniques to produce a shallow drawn intermediate will yield products having fully oriented side walls and non-oriented bottoms. After heat setting, these products will have clear side walls and opaque bottoms. Standard industrial plug-assisted blow moulding techniques, which are done well above the orientation temperature, would yield a totally non-oriented container that would be completely translucent when heat set. Plug assisted blow moulding done at the orientation temperature would yield upon heat setting a container with clear sidewalls, rounded corners and a translucent bottom.

The embodiment of the female forming tube shown in Fig 2 does not include an air inlet, and operates without friction reduction by the introduction of air as in other embodiments of the intermediate forming process.

### Rim heat-setting apparatus

Figure 4 shows an alternative rim forming apparatus to that disclosed in WO 90/10410. This apparatus is particularly suited for the crystallisation of the non-oriented rim of the biaxially oriented long drawn intermediate 50 that leads to the long drawn container. This rim forming apparatus 234 consists of two elements: an upper clamping portion 236 and a lower plate 238. Each of the elements is separately heated and may be maintained at different temperatures. The intermediate container 50 may be placed between the two elements in order to at least partially crystallise the rim of the intermediate.

The upper clamping portion 236 includes heating elements 240 and a lower frustoconically shaped mandrel 242 made of a low thermal conductivity non-stick material such as Teflon. The mandrel 242 serves the following functions:
(i) to help centre the intermediate on the apparatus;
(ii) to help prevent the side walls adjacent the heating elements from shrinking and
(iii) to help in removing the intermediate smoothly from the upper clamping element 236.

The upper clamping portion 236 also includes air inlet port 243 capable of introducing a positive air pressure into the interior of the intermediate to remove it from the upper clamping portion 236 and mandrel 242. The lower plate 238 is provided with a circular opening 244 and heating elements 246. In a preferred embodiment, both elements are maintained at about 149-204°C (300-400°F).

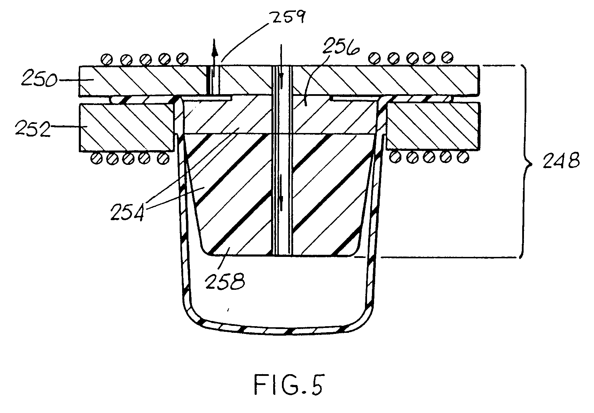

Figure 5 shows a rim-forming apparatus for use in forming the short drawn container 210 of Figure 3. This rim-forming apparatus 248 is to be used only with intermediates formed in the intermediate forming apparatus shown in Figure 2. This embodiment is again quite similar to that shown in Figure 4. Again the apparatus 248 consists of an upper clamping element 250 and a lower plate element 252 which is identical to the element 238 of Figure 4. Attached to the upper clamping plate 250 is a mandrel 254 comprised of two sections. The upper section 256, that area adjacent the bulk of the horizontal plate, is made of aluminium or other thermally conductive material. This area should extend down a distance commensurate with the thick unoriented area of the upper side wall of the intermediate formed in the apparatus shown in Figure 2. The lower section 258 of the mandrel 254 is preferably made of a low thermal conductivity material such as Teflon which is resistant to high temperatures. The upper clamping element 250 also includes a port 259 that allows a negative pressure to be applied between the upper clamping element 250 and the areas of the intermediate to be heat set. This ensures that the horizontal rim portion and the unoriented sidewall portion of the intermediate will be fully in contact with the heated aluminium areas of the upper clamping element 250 and upper section 256. In the preferred embodiment, the upper clamping element 250 is maintained at between 149-204°C (300-400°F) and the lower plate is about 93-204°C (200-400°F).

The time required for heat setting the rim of an intermediate using the apparatus 234 or 248 depends on a number of factors. For example, the time differs depending on whether pure PET or nucleated PET is used. Under one set of temperature conditions, PET took 30 seconds where nucleated PET took 6 seconds.

In some embodiments the rim is not fully heat set when exiting the rim heat set apparatus. In such cases, the rim setting proceeds far enough to impart sufficient rigidity to the container to enable it to withstand the forces exerted on it during the heat shrink/body set stage. The rim setting is then completed during the heat shrink/body setting stage.

### The heat shrinking/body setting process

Because of the dynamics of the blow forming and heat shrinking processes, there are some factors to be considered in determining the appropriate sizes for the intermediate container and the male form. Those areas of the intermediate container closest to the opening or rim portion of the container are less oriented circumferentially than those portions in or near the bottom of the container. Consequently the less oriented areas of the intermediate will have a lessened capacity to shrink radially, and must therefore be in closer physical proximity to the male form than the more highly oriented sections of the intermediate. At the junction of the rim with the side wall, the intermediate actually fits against and in contact with the male form, while at the bottom of the intermediate, a moderate air gap may exist between the intermediate and the male form.

It has been found that an improved and faster heat shrinking/body setting process is provided when there is used a heated mandrel or male form. It was suggested in the Sumitomo Bakelite patent publication, supra, that a preheated mandrel could be used to facilitate the heat shrinking process. While the use of a hot mandrel can reduce heat setting times, the use of a hot mandrel on its own yields products that are unacceptable. As the biaxially oriented intermediate approaches the hot mandrel, localised shrinkage occurs and the final product has serious optical imperfections in its surface. This is true even if the male mould is inserted into the intermediate very rapidly.

The present inventor has found that the shortened heat shrink times available using a hot male mould can be achieved without optical imperfections by forcing air, preferably hot air, between the intermediate and the heated male mould. The present process and apparatus can be used for either long drawn or short drawn containers. If heated air is used, not only does the air hasten shrinkage of the intermediate, but more importantly, it facilitates complete shrinkage of the intermediate onto the male mould without the development of optical imperfections. For PET, the temperature of the heated male mould and the heated air may be as high as 227°C (440°F).

In order to further decrease the heat setting times, other elements may be added to the hot air/heated mould design. Thus means may be provided for directing hot air against the exterior of the intermediate, and a cooled female form, hereinafter referred to as "chill shell" may be provided for accepting the heat set and still hot and malleable container after heat shrinking/body setting.

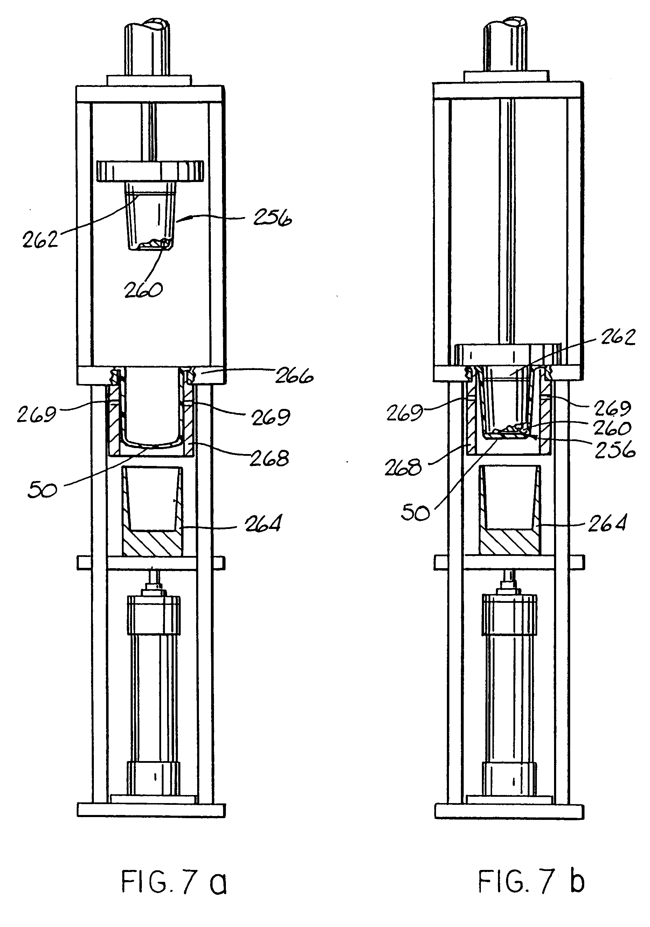

Figure 6 shows a heated mandrel or male mould 256 which consists primarily of a form shaped to correspond to the desired inside dimensions of the final product. Air ports 260 and 262 are found at the bottom and side of the mould respectively. The mould 256 is designed to operate with heated air either being forced through the bottom air port 260 and vented through side air port 262, or being forced through side air port 262 and vented through bottom air port 260. Where the heated air should be expelled, and the pressure used, depends upon the type of container being formed (long drawn or short drawn), the thickness of the original thermoplastic sheet, the type of thermoplastic being used (e.g. pure PET or nucleated PET), and other factors. One of ordinary skill in the art may without undue experimentation determine the desired location and pressure of the heated air.

Considerations as to where to force the heated air out of the male mould include the following. When heated air is expelled through the bottom of the male mould via the outlet 260 and the intermediate has at lest partly shrunk around the male mould, a high pressure region exists at the bottom of the intermediate. It is advantageous to provide the high pressure region at this location because the material at the bottom of the intermediate is fully biaxially oriented and can withstand relatively high pressures without permanent deformation. However, this arrangement has the disadvantage that the downward force on the container rim is relatively high, and in order to resist this force the rim must be heat set sufficiently to withstand it without distortion. In this mode, pressures measured at the port 260 are typically 69-345 kPa (10-50 psi). For heat shrinking/body setting nucleated PET long drawn containers or containers without heat set rims, the preferred process is to use heated air outlet 260. When heated air is expelled through the side of the heated male mould through outlet 262, a high pressure region is formed on the side walls of the container, which has the advantage that downward forces on the container rim are relatively low. However there is then the disadvantage that high pressures acting on the side walls of the intermediate may permanently deform the side walls which are less oriented circumferentially, thus preventing them from fully shrinking against the heated male mould. In this mode, pressures measured at port 262 are typically 3.5-55 kPa (0.5-8 psi). For heat shrinking/body setting pure PET or nucleated PET short drawn containers, the preferred process is to expel heated air through outlet 262.

As seen in the example in Figure 6, the mould 256 may be provided with a recessed bottom. During the portion of the cycle where the port 260 is not being used for heated air, the port may be used to create a vacuum at the bottom of the container so that the intermediate will take on the shape of the recessed bottom. At the end of the cycle, port 260 may also be used for forcing air inside the heat set container in order to remove the container from the male mould.

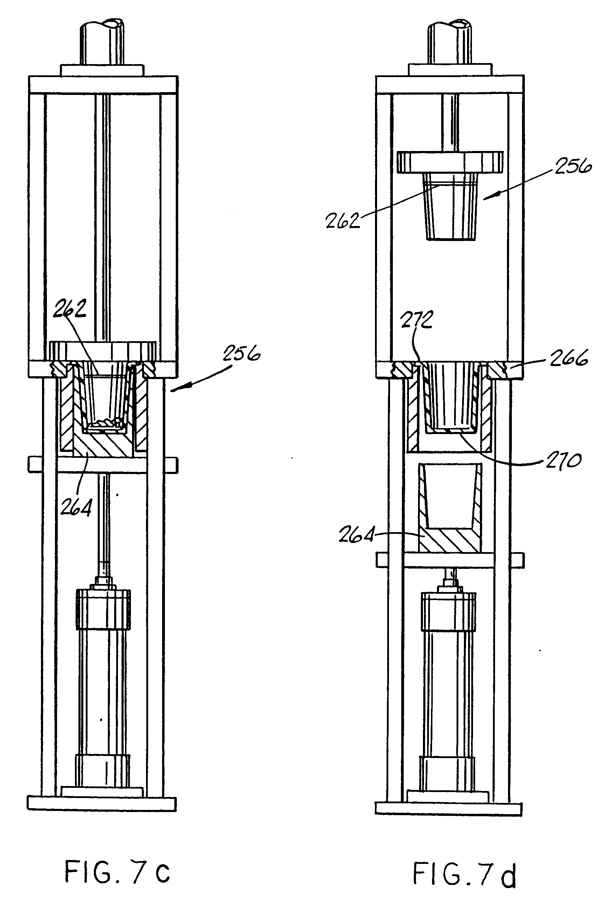

In Figs 7a-7d, the male mould of Fig 6 is shown as 256. The series of figures shows the progression and operation of the heat shrinking/body setting apparatus of this embodiment. The intermediate container 50 is shown in Fig 7a as it would be placed in the apparatus to initiate the process. The male mould 256 is movable vertically and its motion can be controlled by any number of well-known mechanisms. The chill shell 264 is held below the intermediate container 50, and is also movable in a vertical direction.

In Figure 7a, the intermediate container 50 is held in place supported on its rim on a circular ledge 266 and is generally surrounded by a heated cylindrical tube 268 equipped with heated air outlets 269 for forcing heated air against the exterior of the intermediate during heat setting. The first action taken by the apparatus is shown in Fig 7b. The heated male mould is inserted into the interior of the intermediate. Heated air exits the heated mandrel at either port 260 or 262 and heated air is also directed against the exterior of the intermediate through port 269. While still in the same physical configuration as Fig 7a, the interior heated air is removed and a vacuum is applied at port 260 if a recessed bottom is desired.

The next physical stage is shown in Fig 7c where the chill shell 264 is raised up into position surrounding the heat set intermediate and the male mould. In a preferred embodiment, the chill shell 264 is machined to be approximately 0.025 cm (0.010 inches) from the exterior of the heat set container at all points and is maintained at a temperature that is less than the glass transition temperature of the material. At the same time that the chill shell is raised into place, the vacuum at the bottom of the container is released. Very shortly thereafter positive pressure is applied through port 260 to transfer the container from the male mould to the chill shell 264. During this process the dimensions of the container are slightly expanded as the container is still quite hot. Upon contact with the chill shell 264 the container cools rapidly and stiffens.

The male mould is then raised and the container remains within the chill shell 264. Finally, as depicted in Fig 7d, the chill shell 264 is lowered and the heat set container 270 is suspended by its rim 272 on the circular ledge 266.

Factors that affect the time required for heat shrinking/body setting include:
(1) the type of thermoplastic used,
(2) the sheet thickness,
(3) the temperature of the heated male mould 256,
(4) the temperature and flow rate of the interior heated air,
(5) the temperature and flow rate of the exterior heated air and
(6) the level of heat set required.

For the level of heat set desired in preferred embodiments, when using pure PET or nucleated PET, the heated male mould 256 is held at 149-227°C (300-440°F) and the heated air, internal or external is held in about the same range. For optimal results, the intermediate is at about its orientation temperature (about 85-93°C, 185-200°C) when the heat setting cycle begins. Considering that the various parameters can be readily adjusted by a person skilled in the art, the various steps depicted in Figs 7a-7d can cumulatively be accomplished in as little as about 4.5 seconds.

Using the heat shrink/body set apparatus as depicted in Figures 6 and 7a-7d and as described above, it is possible to create a container having different characteristics from the containers shown in WO 90/10410. The use of the high orientation achievable in the blow forming step coupled with the superior heat shrinking that can be obtained using the heated mandrel and the heated air enables the amount of shrinkage that an intermediate will undergo to be greatly increased without creating visual imperfections in the final product.

As described above, due to the manner in which biaxially oriented intermediates are formed, the minimum depth of draw for a given material is relatively fixed. For example, for PET, to achieve an intermediate with fully oriented sidewalls the depth of draw must be at least 1.3. The ability to produce a container having a final depth of draw less than this is, therefore, a function of the amount of shrinkage that can occur during the heat shrinking step. For example, a PET intermediate formed in the apparatus shown in Figure 1 will typically have a depth to diameter ratio of about 1.2-1.4. Utilising this embodiment, such an intermediate may be placed on a male mould 256 in this embodiment dimensioned to yield a container with a depth to diameter of between 1.2 and 0.7. The heat shrinking/body set apparatus shown in Figs 6 and 7a-7d can form clear containers from intermediates in which the volume of the formed container will be between 50% and 95% of the volume of the starting intermediate. Without the introduction of air, shrinkage to a volume of less than 75% would not be possible. Through this process a PET container can be obtained having oriented, heat set and clear side walls and bottom with a depth to diameter ratio of less than 1.0. Furthermore, these containers may have a translucent heat set rim portion adjacent the mouth of the container. The biaxially oriented intermediate leading to this product need not be formed according to the teachings of this invention, but may be formed by any technique that yields an intermediate with sufficiently oriented side walls and bottom. The key to this embodiment is the improved heat shrinking/body setting afforded by the apparatus depicted in Figs 6 and 7a-7d which allows a greater degree of volume reduction due to the heated male form and the introduction of air.

The invention will now be further described with reference to the following example.

### Example

In this Example, a flat bottomed container having a flanged cylindrical side wall, like the container of Figure 3 of WO 90/10410 is produced, but without a V-shaped depression in the rim. The intermediate forming apparatus of Figure 1 is used, followed by the rim setting apparatus of Figure 4 and the heat shrinking/body set apparatus shown in Figures 6 and 7a-7d. The starting material is nucleated PET sheet of thickness 0.1 cm (0.040"). In the intermediate forming apparatus of Figure 12, the upper clamping plate 300 is held at 95°C (203°F and the lower female forming tube 200 is maintained at 85°C (185°F). Room temperature sheet was placed into the apparatus and a vacuum was drawn through port 306 to draw the sheet into thermal contact with the clamping plate 300 for 90 secs. (Preheated sheet may be used, and this step may be eliminated). The vacuum to port 306 was the removed and air heated to approximately 93°C (200°F) was forced into the port to "blow" the sheet into the forming tube. The final pressure was about 345 KPa (50 p.s.i.) and the forming time was less than 1.5 sec. Simultaneous to the application of air through port 306, air heated to about 93°C (200°F) was also forced through port 318 to provide the forming tube "air cushion". This air was controlled by a restriction valve fed by an 552 KPa (80 p.s.i.) source.

After intermediate formation, the intermediate was transferred as quickly as possible to the rim setting apparatus shown in Figure 4.The upper rim set plate was maintained at 177°C (350°F) and the lower rim set plate was also maintained at 177°C (350°F). Rim heat setting proceeded for six seconds.

After rim heat setting the intermediate was transferred to the heat shrink/body set apparatus as shown in Figures 6 and 7a-7d. In the heat shrink/body set stage. the male mold and the air exiting the male mold port 260 were held at 221°C (430°F). A pressure regulator held the maximum pressure at port 260 to 172 KPa (25 p.s.i.). The surrounding cylinder and the exterior heated air were held at 204°C (400°F). Exterior heated air flow was about 2SCFM. The chill shell was maintained at 38°C (100°F).

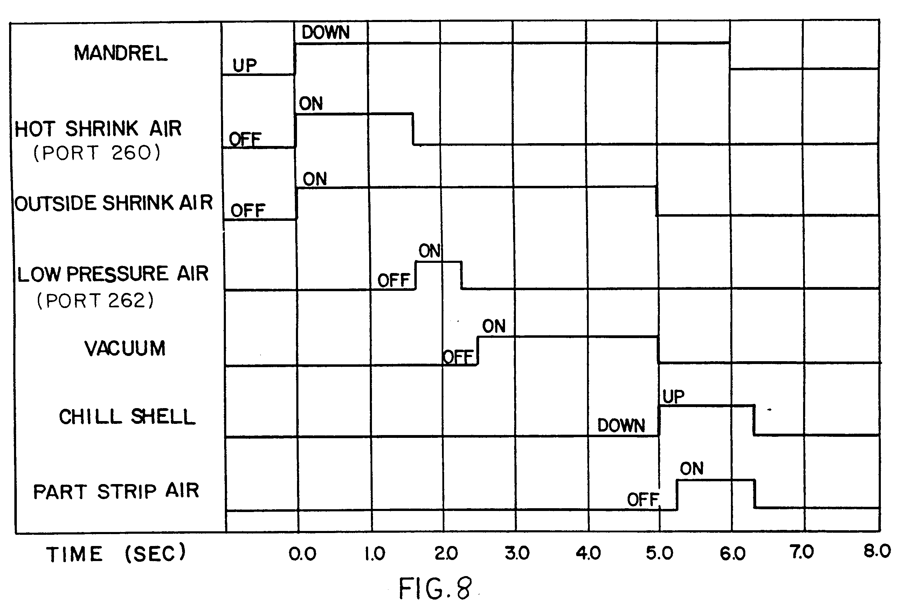

A time schematic of the heat process is shown in Figure 8. A total time of less than 7.0 seconds is used to take the rim heat set intermediate to the final formed container i.e. to go from Figure 7a to Figure 7d. The final product has a side wall thickness of about 0.015-0.030 cm (0.006-0.012") and a bottom thickness of about 0.030cm (0.012"). The final product is autoclaveable with less the 1% volumetric shrinkage.

### Two-station forming processes

As described above, when using a continuous process for forming container-shaped articles with a heat set rim, it is generally preferred to use a three step process. Since each of these processes takes place at a separate station, the three steps can be performed simultaneously by the same apparatus. However, an apparatus including three stations is often considered undesirable due to the extra tooling required.

The most obvious alternative to the three step/station process is to combine the rim setting and heat shrinking processes since both steps require additional heating of the intermediate. Using the heat shrinking/body setting apparatus shown in Figures 7a-7d, efforts to combine the rim setting and heat shrinking steps were unsuccessful. In that embodiment, without heat setting the rim prior to heat shrinking, the rim area did not have sufficient strength to remain undistorted when subjected to the forces of the shrinking body. The shrinkage of the oriented sidewalls caused the unoriented rim portion to be "pulled" out of the plane of the rim into the sidewalls. The product formed in such a manner does not have the desired visual appearance. Rather than there being a clearly defined junction between the translucent rim and the transparent sidewalls, there may be an uneven translucent area on the sidewalls adjacent the rim. It is to prevent this occurrence that the three station process is desirable.

A further embodiment of the invention, shown in Figures 9 and 10, provides a two-step process in which the intermediate is both rim set and heat shrunk simultaneously at the same station. The problem of the unoriented rim being pulled into the sidewalls of the container is addressed by providing means that serves to clamp the intermediate against the heated mandrel, said means being located adjacent the mouth of the container ledge that supports the intermediate and thus isolating the shrinkage forces from the rim area.

Figure 9 is analogous to Figure 7a and shows a male mold 256 as shown in Figure 6 and the ledge on which the intermediate rests. A chill shell would be used as described with reference to Figures 7a-7d, but is not shown in Figure 9.

The circular opening in the ledge 310 on which the intermediate is placed has a diameter that is just slightly larger than the maximum outside diameter of the sidewalls of the intermediate. The inside of the ledge 310 is made up of upper 312 and lower 314 aluminium circular retaining elements that secure an O-ring or gasket 316. The retaining elements 312,314 are relatively movable. The gasket 316 has an inside diameter just slightly smaller than the inside diameter of the upper and lower retaining elements. When the retaining elements are forced closer together, the squeezing action causes the O-ring 316 to distort, and effectively reduces the inside diameter of the O-ring. Beneath the ledge 310 is a heated cylindrical tube 318 that has an interior diameter go-eater than that of the ledge 310 to allow the chill shell to rise up adjacent to the to the intermediate 50 after heat shrinking. The heated cylindrical tube may contain air outlets (not shown) for passing heated air against the outside of the intermediate during heat shrinking. The upper retaining element 312 is heated in order to help heat the unoriented and non-heat-set rim.

Figure 10 shows the apparatus of Figure 9 after the intermediate 50 has been placed onto the ledge 310 and the male mold 256 has been inserted into the intermediate 50 but before the intermediate has been heat shrunk to conform to the dimensions of the male mold 256. As is apparent from Figure 9, as the base 320 of the male form is moved up against the ledge 310, the upper retaining element 312 is pushed towards the lower retaining element 314 to compress the O-ring 316. This pressure on the O-ring 316 causes it to expand in a directional orthogonal to the direction of compression, thereby clamping the mouth portion of the intermediate 50 to the male mold 256.

In an alternative embodiment (not shown) retaining elements 312 and 316 are held in fixed position relative to each other, and pressurised air is introduced into the area to the outside of the O-ring 316. The effect of the pressurised air is to distort the O-ring 316 to reduce its inside diameter in much the same way as the O-ring is distorted in Figure 10. The ability to vary the inside diameter of the O-ring as described herein allows for the clamping action to be either activated or released, and aids in the introduction of the intermediate into and out of the apparatus.

In addition to the heated upper retaining element 312, the rim portion of the intermediate 50 is also heated by the heated base portion 320 of the male mold 256. The sidewall portions of the intermediate are heated by hot air exiting the male mold and the heated cylindrical tube.

In this embodiment, the tendency of the unoriented rim to be pulled into the sidewalls of the container during heat shrinking is prevented by the clamping of the intermediate sidewalls between the male mold 256 and the resilient O-ring 316. It is therefore possible to bypass a separate rim-setting station and to use a two-station process where the intermediate is formed at the first station and the rim is heat set and the sidewalls heat shrunk at the second station.

The above detailed description and drawings are provided only for the purpose of illustrating in detail various methods for forming containers and are not intended to limit the invention, which is defined in the claims below.

## Claims

1. A method for producing biaxially oriented thermoplastic container-shaped articles, comprising the steps of providing a heat-shrinkable container-shaped intermediate (50) of a thermoplastic material and comprising a bottom and a side wall or walls which are biaxially oriented, placing the intermediate (50) on a heated male form (256) of a predetermined size, shape and texture, heating the intermediate to above the orientation temperature of the thermoplastic material to heat shrink the intermediate onto the surface of said form (256) and thereby produce said article, and removing the article (270) from the form, characterised in that the intermediate is heated with hot air (260) exiting the male form (256).

2. The process of claim 1, wherein the thermoplastic material is a crystallisable polymer.

3. The process of claim 3, wherein the crystallisable polymer is a polyester, polyhexamethylene adipamide, polycaprolactam or polyhexamethylene sebacamide.

4. The process of claim 3, wherein the polyester is polyethylene terephthalate.

5. The process of claim 4, wherein the polyethylene terephthalate contains a crystallisation promoter.

6. The process of any preceding claim, wherein the container shaped intermediate is blow formed from a sheet of thermoplastic material.

7. The process of claim 6, wherein the container shaped intermediate is formed by clamping the sheet of material over the mouth of a forming tube (200), heating the material to about its orientation temperature, and applying fluid pressure to the face of the sheet in order to cause the sheet to enter into and substantially conform to the interior shape of the forming tube.

8. The process of claim 7, wherein the fluid application step is carried out without plug assist, and means (314, 318) is provided for preventing the material entering into and conforming to the shape of the forming tube from sticking to the walls of the forming tube, so as to permit the biaxial orientation to occur.

9. The process of any of claims 6-8, wherein the depth of draw of the container shaped intermediate is sufficient for full orientation of the side wall or walls.

10. The process of claim 9, wherein the draw ratio of the side wall or walls is 1.3 or above.

11. The process of any of claims 6-8, wherein the depth of draw of the container shaped intermediate is sufficient for partial orientation of the side wall or walls.

12. The process of claim 11, wherein the draw ratio is in the range 0.5-1.2.

13. The process of any of claims 6-8, wherein the intermediate is of polyethylene terephthalate and has a depth to diameter ratio of 1.2-1.4, and after shrinking on the male mould has a depth to diameter ratio of 0.7-1.2.

14. The process of any preceding claim, wherein the volume of the formed container is less than 75% of the volume of the intermediate.

15. The process of any preceding claim, wherein the container has a crystallisable rim portion.

16. The process of claim 15, wherein the rim portion is heat set before the intermediate is heat shrunk.

17. The process of claim 15, wherein the rim portion is heat set when the intermediate is heat shrunk.

## Patentansprüche

1. Verfahren zur Herstellung biaxial orientierter, thermoplastischer, behälterförmiger Gegenstände, umfassend die Schritte: Bereitstellen eines wärmeschrumpfenden, behälterförmigen Zwischenproduktes (50) aus thermoplastischem Material, das einen Boden und eine Seitenwand oder -wände umfaßt, die biaxial orientiert sind, Anordnen des Zwischenproduktes (50) auf einer erwärmten Außenform (256) mit vorgegebener Größe, Form und Struktur, Erwärmen des Zwischenproduktes über die Orientierungstemperatur des thermoplastischen Materials, so daß das Zwischenprodukt einer Wärmeschrumpfung auf die Oberfläche der Form (256) unterliegt und der Gegenstand somit hergestellt wird, Entfernen des Gegenstandes (270) von der Form, **dadurch gekennzeichnet**, daß das Zwischenprodukt beim Verlassen der Außenform (256) mit Heißluft (260) erwärmt wird.

2. Verfahren nach Anspruch 1, wobei das thermoplastische Material ein kristallisierbares Polymer ist.

3. Verfahren nach Anspruch 3, wobei das kristallisierbare Polymer Polyester, Polyhexamethylenadipamid, Polycaprolactam oder Polyhexamethylensebacamid ist.

4. Verfahren nach Anspruch 3, wobei der Polyester Polyethylenterephthalat ist.

5. Verfahren nach Anspruch 4, wobei das Polyethylenterephthalat einen Kristallisationspromotor enthält.

6. Verfahren nach einem der vorstehenden Ansprüche, wobei das behälterförmige Zwischenprodukt aus einer Lage eines thermoplastischen Materials blasgeformt wird.

7. Verfahren nach Anspruch 6, wobei das behälterförmige Zwischenprodukt geformt wird, indem die Lage des thermoplastischen Materials über der Öffnung eines Formrohrs (200) festgeklemmt, das Material über die Orientierungstemperatur erwärmt und auf die Fläche der Lage ein Fluiddruck angewendet wird, damit die Lage in die Innenform des Formrohrs gelangt und mit dieser im wesentlichen konform wird.

8. Verfahren nach Anspruch 7, wobei der Schritt der Fluidanwendung ohne Hilfe eines Stopfens erfolgt und eine Einrichtung (314, 318) vorgesehen ist, um zu verhindern, daß das Material, das in die Form des Formrohrs gelangt und mit dieser konform wird, an den Wänden des Formrohrs klebt, so daß das Auftreten der biaxialen Orientierung möglich wird.

9. Verfahren nach einem der Ansprüche 6 bis 8, wobei die Ziehtiefe des behälterförmigen Zwischenproduktes für die vollständige Orientierung der Seitenwand oder -wände ausreichend ist.

10. Verfahren nach Anspruch 9, wobei das Streckverhältnis der Seitenwand oder -wände 1,3 oder mehr beträgt.

11. Verfahren nach einem der Ansprüche 6 bis 8, wobei die Ziehtiefe des behälterförmigen Zwischenproduktes für eine teilweise Orientierung der Seitenwand oder -wände ausreichend ist.

12. Verfahren nach Anspruch 11, wobei das Streckverhältnis im Bereich von 0,5 bis 1,2 liegt.

13. Verfahren nach einem der Ansprüche 6 bis 8, wobei das Zwischenprodukt aus Polyethylenterephthalat ist und ein Verhältnis von Tiefe zu Durchmesser von 1,2 bis 1,4 hat und nach dem Schrumpfen auf der Außenform ein Verhältnis von Tiefe zu Durchmesser von 0,7 bis 1,2 hat.

14. Verfahren nach einem der vorstehenden Ansprüche, wobei das Volumen des geformten Behälters weniger als 75 % des Volumens des Zwischenproduktes beträgt.

15. Verfahren nach einem der vorstehenden Ansprüche, wobei der Behälter einen kristallisierbaren Randabschnitt hat.

16. Verfahren nach Anspruch 15, wobei der Randabschnitt thermofixiert wird, bevor das Zwischenprodukt wärmegeschrumpft wird.

17. Verfahren nach Anspruch 15, wobei der Randabschnitt thermofixiert wird, wenn das Zwischenprodukt wärmegeschrumpft worden ist.

## Revendications

1. Procédé de fabrication d'objets thermoplastiques à orientation biaxiale configurés en conteneur , comprenant les étapes consistant à fournir un produit intermédiaire en forme de conteneur pouvant rétrécir à la chaleur (50) en matériau thermoplastique et comprenant un fond et une paroi ou des parois latérale(s) qui sont à orientation biaxiale, à placer le produit intermédiaire (50) sur une forme mâle chauffée (256) d'une dimension, d'une forme et d'une texture prédéterminées , à chauffer le produit intermédiaire au-dessus de la température d'orientation du matériau thermoplastique pour rétrécir thermiquement le produit intermédiaire sur la surface de ladite forme (256) et produire ainsi ledit objet, et à retirer l'objet (270) de la forme , caractérisé en ce que le produit intermédiaire est chauffé à l'air chaud (260) sortant de la forme mâle (256).

2. Procédé selon la revendication 1, dans lequel le matériau thermoplastique est un polymère cristallisable.

3. Procédé selon la revendication 3, dans lequel le polymère cristallisable est un polyester, un polyhexaméthylène adipamide , un polycaprolactame ou un polyhexaméthylène sébacamide .

4. Procédé selon la revendication 3, dans lequel le polyester est du polytérephtalate d'éthylène.

5. Procédé selon la revendication 4, dans lequel le polytérephtalate d'éthylène contient un promoteur de cristallisation.

6. Procédé selon l'une quelconque des revendications précédentes, dans lequel le produit intermédiaire configuré en conteneur est formé par soufflage à partir d'une feuille de matériau thermoplastique.

7. Procédé selon la revendication 6, dans lequel le produit intermédiaire configuré en conteneur est formé en bloquant la feuille de matériau sur l'ouverture d'un tube de formage (200), en chauffant le matériau à environ sa température d'orientation, et en appliquant une pression de fluide à la surface de la feuille afin d'entraîner essentiellement la feuille à pénétrer dans la forme intérieure du tube de formage et à s'y conformer .

8. Procédé selon la revendication 7, dans lequel l'étape d'application de fluide est réalisée sans l'aide de broche et des moyens (314, 318) sont fournis pour empêcher le matériau entrant dans le tube de formage et s'adaptant à la forme du tube de formage de coller sur les parois du tube de formage , de façon à permettre à l'orientation biaxiale de se produire.

9. Procédé selon l'une quelconque des revendications 6 à 8, dans lequel l'épaisseur de retrait du produit intermédiaire configuré en conteneur est suffisante pour une orientation totale de la paroi ou des parois latérale(s).

10. Procédé selon la revendication 9, dans lequel le taux de retrait de la paroi ou des parois latérale(s) est de 1,3 ou plus.

11. Procédé selon l'une quelconque des revendications 6 à 8, dans lequel l'épaisseur de retrait du produit intermédiaire configuré en conteneur est suffisante pour une orientation partielle de la paroi ou des parois latérale(s).

12. Procédé selon la revendication 11, dans lequel le taux de retrait se situe dans la gamme de 0,5 à 1,2.

13. Procédé selon l'une quelconque des revendications 6 à 8, dans lequel le produit intermédiaire est constitué de polytérephtalate d'éthylène et possède un rapport épaisseur sur diamètre de 1,2 à 1,4, et après rétrécissement sur le moule mâle, présente un rapport épaisseur sur diamètre de 0,7 à 1,2.

14. Procédé selon l'une quelconque des revendications précédentes, dans lequel le volume du conteneur formé est inférieur à 75% du volume du produit intermédiaire.

15. Procédé selon l'une quelconque des revendications précédentes, dans lequel le conteneur comporte une partie de rebord cristallisable.

16. Procédé selon la revendication 14, dans lequel la partie de rebord est thermoformée avant que le produit intermédiaire ne soit thermorétréci.

17. Procédé selon la revendication 15, dans lequel la partie de rebord est thermoformée lorsque le produit intermédiaire est thermorétréci.
